# EUROPÄISCHE PATENTSCHRIFT

(11) **EP 2 061 126 B1**
(45) Veröffentlichungstag und Bekanntmachung des Hinweises auf die Patenterteilung: **01.08.2012**
(21) Anmeldenummer: 08020140.3
(22) Anmeldetag: 19.11.2008
(51) Int. Cl.: H02G 3/22, H02G 3/04, C09K 21/02

(54) **Brandschutz-Kabeldurchführung**
Fire protected lead-through cable guidance
Passage de câble ignifuge

(30) Priorität: 19.11.2007 DE 102007055373; 02.01.2008 DE 102008003120
(43) Veröffentlichungstag der Anmeldung: 20.05.2009
(73) Patentinhaber: Rodenberg, Volker, 56291 Leiningen (DE)
(72) Erfinder: Rodenberg, Volker, 56291 Leiningen (DE)
(74) Vertreter: Gesthuysen, von Rohr & Eggert

(56) Entgegenhaltungen:
- DE-C1- 19 912 988
- DE-U1- 20 018 643
- DE-U1-202006 004 488
- FR-A1- 2 826 968
- US-A- 5 347 767

## Beschreibung

Die Erfindung betrifft eine Brandschutz-Kabeldurchführung zur Abschottung von Wand- oder Deckendurchbrüchen für Kabel, Rohre und dergleichen, nach dem Oberbegriff des Anspruchs 1.

Eine Brandschutz-Kabeldurchführung der vorgenannten Art ist bereits aus der DE 200 18 643 U1 bekannt.

Üblicherweise werden Brandschutz-Kabeldurchführungen zum präventiven Brandschutz innerhalb von Bauwerken eingesetzt. Dabei wird die Brandschutz-Kabeldurchführung in das Mauerwerk eingesetzt und die Kabel durch den vorgesehenen Innenraum hindurchgeführt. Die Kabeldurchführungen bestehen aus einem Gehäuse aus verzinktem Stahlblech, das mit Brandschutzpaketen, beispielsweise sogenannten Palusol-Paketen, ausgekleidet ist. Die Brandschutzpakete enthalten ein intumeszentes Brandschutzmaterial. Im Falle eines Brandes, der mit einer Erwärmung der Brandschutz-Kabeldurchführung einhergeht, schäumt das Brandschutzmaterial auf und verschließt den Innenraum der Kabeldurchführung weitgehend vollständig. Hierdurch wird eine Luftzufuhr durch die Kabeldurchführung vermieden und das Feuer passiv bekämpft. Eine Kabeldurchführung der vorbeschriebenen Art ist beispielsweise aus der DE 20 2004 011 259 U1 bekannt.

Innerhalb des Gehäuses sind an den Seitenwänden des Gehäuses Palusol-Pakete vorgesehen, die sich im Wesentlichen über die gesamte Länge des Gehäuses erstrecken. Im Bereich der Gehäuseöffnung ist ein Dämmstoff-Paket angeordnet, dessen Form mit der Form des Gehäuseinnenraums korrespondiert. Das Dämmstoff-Paket ist mit einer Bohrung ausgestattet, die zum einen der Kabeldurchführung und zum anderen der Handhabung dient, so dass das Dämmstoff-Paket leicht ergriffen und entfernt werden kann. Das Dämmstoff Paket hat den Zweck, in einer Kabelabschottung, die im Brandfall zuschäumt, eine funktionssichere Abdichtung gegenüber kaltem und heißem Rauchgas zu gewährleisten, die auch bei einseitiger Zugänglichkeit anwendbar ist, ohne den Innenraum der Abschottung vollständig ausstopfen zu müssen. Sie hat weiter den Zweck, die Rauchgasabdichtung funktionell von der Abdichtung gegen Feuer zu trennen, wobei das Dämmstoff-Paket selbst keine intumeszenten Eigenschaften besitzt.

Aus der DE 20 2006 004 488 U1 geht eine Brandschutz-Kabeldurchführung zur Abschottung von Wand- und Deckendurchbrüchen für Kabel, Rohre und dergleichen hervor, aufweisend ein beidseitig geöffnetes Gehäuse mit einem einen Kabelkanal bildenden Innenraum. Dabei ist vorgesehen, dass wenigstens ein Brandschutzstopfen aus einem bei großer Wärme bzw. im Brandfall expandierenden intumeszenten Brandschutzmaterial vorgesehen ist, wobei der Brandschutzstopfen von außen in eine Gehäuseöffnung des Gehäuses einsetzbar ist und wobei der Brandschutzstopfen die Gehäuseöffnung bei großer Wärme bzw. im Brandfall im Wesentlichen vollständig in Kabelrichtung abschottet.

Aufgabe der vorliegenden Erfindung ist es, eine Brandschutz-Kabeldurchführung der vorgenannten Art weiterzubilden und eine Kabeldurchführung zur Verfügung zu stellen, die sich durch einen einfachen Aufbau und geringe Herstellungskosten auszeichnet und die im Brandfall einen sicheren Verschluss des Innenraums der Kabeldurchführung ermöglicht.

Die vorgenannte Aufgabe ist durch die Merkmale des Anspruchs 1 gelöst. Bei der Erfindung ist an wenigstens einer Wandung des Gehäuses eine Lochung mit einer Mehrzahl von Löchern vorgesehen. Zweckmäβigerveise sollten alle Wandungen des Gehäuses, also die Seitenwände, die Deckelwand und die Bodenwand jeweils mit einer Vielzahl von Löchern versehen sein. Die Lochung hat jeweils den Sinn, einen hohen Wärmedurchgang durch das Gehäuse zu gewährleisten. Die die Lochung bildenden Löcher weisen vorzugsweise einen gleichen Durchmesser auf und sind bevorzugt in einem regelmäßigen Muster angeordnet. Die Querschnittsfläche eines Lochs kann zwischen 10 und 100 mm² betragen. Der Gesamtflächenanteil der Löcher an der Grundfläche einer Wandung kann bevorzugt zwischen 5 und 25 % betragen. Dadurch sind zum einen eine hohe Biegesteifigkeit der betreffenden Wandung und zum anderen ein hoher Wärmedurchgang durch das Gehäuse gewährleistet.

Der Erfindung liegt die überraschende Erkenntnis zugrunde, dass bei geeigneter Wahl des Brandschutzmaterials eine vollständige unterbrechungslose Auskleidung des Gehäuses der Kabeldurchführung mit einem Brandschutzmaterial, wie es aus der DE 20 2004 011 259 U1 bekannt ist, nicht erforderlich ist, um im Brandfall eine vollständige Abschottung des Innenraums der Kabeldurchführung zu gewährleisten. Vorzugsweise ist es so, dass im Brandfall jeder der wenigstens zwei voneinander beabstandeten Brandschutzstreifen bereits zu einer vollständigen Abschottung des Innenraums führt. Es versteht sich, dass dies einen entsprechend hohen Expansionsgrad des Brandschutzmaterials im Brandfall erfordert.

Bei geeigneter Wahl des Brandschutzmaterials können mehrere Brandschutzstreifen vorgesehen sein, wobei die Brandschutzstreifen beabstandet voneinander auf der Innenseite des Gehäuses an der Gehäusewand bzw. den Gehäusewänden befestigt sind. Dadurch lässt sich der Materialbedarf bei der erfindungsgemäßen Kabeldurchführung im Zusammenhang mit der Brandschutzauskleidung deutlich gegenüber dem Stand der Technik verringern, was zu geringen Herstellungskosten der erfindungsgemäßen Kabeldurchführung beiträgt. Die bandförmige Ausbildung der Bandschutzstreifen vereinfacht im Übrigen das nachträgliche Einsetzen der Brandschutzbeschichtung und deren Befestigung an dem Gehäuse.

Bei einer bevorzugten Ausführungsform der Erfindung erstrecken sich die Brandschutzstreifen quer zur Kabelrichtung. Um im Brandfall einen vollständigen Raumabschluss des Innenraums bzw. dessen Abschottung sicherzustellen, können die Brandschutzstreifen an Innenwänden eines quaderförmigen Gehäuses bzw, an einer inneren Mantelfläche eines zylindrischen Gehäuses umlaufend angeordnet sein, so dass jeder Brandschutzstreifen einen durchgehenden, unterbrechungslosen rahmen- oder ringförmigen Brandschutzbereich auf der Innenseite des Gehäuses bildet. Der Brandschutzstreifen erstreckt sich dabei entlang der gesamten Innenkontur des Gehäuses. Um ein gleichmäßiges Zuschäumen des Innenraums im Brandfall zu gewährleisten, können die Brandschutzstreifen im Übrigen parallel zueinander und/oder symmetrisch zur Mittelquerachse des Gehäuses angeordnet sein.

Vorzugsweise sind die Brandschutzstreifen in einem gegenseitigen Abstand von wenigstens 0,5 cm, vorzugsweise von wenigstens 1,0 cm, angeordnet. In Abhängigkeit von der Wahl des Brandschutzmaterials kann es dabei im Brandfall dazu kommen, dass die beiden Brandschutzstreifen zumindest bereichsweise "zusammenwachsen", so dass sich in Kabelrichtung ein durchgehend ausgeschäumter Bereich bildet. Für die Abschottung des Gehäuses in Kabelrichtung ist jedoch das Zusammenwachsen der benachbarten Brandschutzstreifen im Brandfall nicht zwingend notwendig. Es reicht grundsätzlich bereits aus, wenn im Brandfall von einem Brandschutzstreifen eine vollständige Abschottung des Kabelkanals bewirkt wird.

Wenigstens ein Brandschutzstreifen, vorzugsweise beide Brandschutzstreifen, können einen im Wesentlichen gleichbleibenden Abstand zum Außenrand des Gehäuses von mehr als 2 cm, insbesondere von mehr als 3 cm, aufweisen. Dies ermöglicht es, einen Brandschutzstopfen aus einem Dämmstoff oder einem Brandschutzmaterial, worauf nachfolgend noch eingegangen wird, in das Gehäuse einzusetzen, und zwar auf wenigstens einer Öffnungsseite des Gehäuses.

Der Brandschutzstreifen selbst kann eine Dicke von ca. 0,5 bis 1 cm und eine Breite von ca. 2 bis 6 cm, insbesondere von ca. 4 cm, aufweisen. Es versteht sich, dass dies abhängt von der Art des Brandschutzmaterials und dessen Intumeszenzeigenschaften. Die vorgenannten Angaben beziehen sich auf das nachfolgend noch näher spezifizierte Brandschutzmaterial, aus dem die erfindungsgemäß vorgesehenen Brandschutzstreifen vorzugsweise bestehen.

Der Brandschutzstreifen kann mehrteilig ausgebildet sein, nämlich aus einer Mehrzahl von Streifenstücken. Ist der Brandschutzstreifen umlaufend auf der Innenseite des Gehäuses vorgesehen, so kann sich der Brandschutzstreifen aus vier Streifenstücken zusammensetzen, die an den Stirnseiten jeweils miteinander verbunden sind, so dass sich ein unterbrechungsloser Verlauf entlang der Innenkontur der Gehäuses ergibt. Die mehrteilige Ausbildung des Brandschutzstreifens vereinfacht das Einsetzen in das Gehäuse und ermöglicht die Anpassung an den Oberflächenverlauf bzw. die Topographie der Gehäuseinnenwände. Um einen sicheren Halt der Brandschutzstreifen am Gehäuse zu gewährleisten und einen vollständigen Abschluss des Kabelkanals im Brandfall zu ermöglichen, weisen die Brandschutzstreifen bzw. die die Brandschutzstreifen bildenden Streifenstücke dabei eine Größe und Formgebung auf, die eine im Wesentlichen vollflächige Anlage gegen das Gehäuse auf dessen Innenseite zulässt.

Bei den aus dem Stand der Technik bekannten Brandschutz-Kabeldurchführungen mit Palusol-Paketen ist von Nachteil, dass eine Schutzummantelung erforderlich ist, da Palusol CO₂-sensitiv und hydrophil ist. Die Schutzumhüllung trägt zu höheren Herstellungskosten bei. Ohne Versiegelung der Palusol-Pakete kommt es zu einem Verlust der Brandschutzwirkung aufgrund der Wasserempfindlichkeit von Palusol, so dass beim Einsetzen der in eine Schutzummantelung eingesetzten Palusol-Pakete in die Kabeldurchführung große Vorsicht geboten ist, um eine Beschädigung der Ummantelung und damit einen Wirkungsverlust des Brandschutzmaterials zu vermeiden. Die Erfindung sieht an dieser Stelle die Verwendung eines nicht-CO₂-sensitiven und hydrophoben Brandschutzmaterials vor, so dass die Brandschutzstreifen ummantelungsfrei, d. h. unverpackt und ohne Schutzhülle, an den Innenwänden des Gehäuses angebracht werden können. Dadurch werden die Montage der erfindungsgemäßen Kabeldurchführung vereinfacht und die Herstellungskosten gesenkt.

Das Brandschutzmaterial kann bei der erfindungsgemäßen Brandschutz-Kabeldurchführung mindestens ein wärmeexpandierbares Intumeszenzmittel, mindestens ein Kunststoffmaterial und/oder dessen Vorläufer und eine Mischung auf Basis mindestens eines Aluminiumsilikates (Alumosilikates) einerseits und mindestens eines Salzes andererseits enthalten. Das Brandschutzmaterial ist flamm- und/oder brandbeständig, wänneexpandierbar und organisch-anorganisch basiert. Das zuvor beschriebene Brandschutzmaterial kann sowohl in den Brandschutzstreifen als auch in dem Brandschutzstopfen enthalten sein, wobei es auch möglich ist, eine andere Brandschutzzusammensetzung einzusetzen, wie sie beispielsweise in der DE 103 02 198 A1 beschrieben ist.

Unter dem Begriff der Intumeszenz versteht man im Rahmen des Brandschutzes ein "Schwellen" bzw. Aufschäumen von Materialien. Intumeszente Baustoffe nehmen unter Hitzeeinwirkung an Volumen zu und nehmen an Dichte ab. Im allgemeinen finden intumeszente Stoffe im vorbeugenden baulichen Brandschutz Anwendung, wo sie folgende Aufgaben haben können:
- Aufschäumen (d. h, Ausbildung einer leichten Isolierungsschicht als Hitzebremse): Beispielsweise in die Isolation eines Kabels eingebrachte Stoffe (z, B. expandierbares Graphit bzw, Blähgraphit) setzen bei Wärmeeinwirkung Gase frei, so daß zusammen mit einem geeigneten Kunststoffisolierungsmaterial eine geschäumte Schicht entsteht, welche die Sauerstoffzufuhr und somit die Flammausbreitung behindert.
- Endotherme Wirkung durch Hydrate, die kühlenden Dampf spenden.
- Aufbringen von Expansionsdruck (z. B. zur Versiegelung von Kunststoff rohren) in Durchbruchsbereichen (z. B. Rohrleitungsdurchgänge in Wänden oder Decken) im Brandfall.

Intumeszente Baustoffe und Intumeszenzmaterialien und -massen sind aus dem Stand der Technik bekannt. In diesen Materialien des Standes der Technik kommt als Intumeszenzmittel, welches unter Wärme- bzw. Hitzeeinwirkung expandiert, oftmals sogenannter Blähgraphit zum Einsatz. Wie Diamant, so ist Graphit eine reine Kohlenstoffmodifikation, wobei die hexagonalen Grundeinheiten des Graphits sehr stabile Flächengitter ausbilden, zwischen denen nur schwache Bindungskräfte wirken. Aus dieser Struktur heraus resultieren die besonderen Materialeigenschaften des Graphits, nämlich die gute elektrische und thermische Leitfähigkeit, hervorragende Schmiereigenschaften, eine extreme Temperatur- und Oxidationsresistenz sowie die Fähigkeit zur Ausbildung von Einlagerungsverbindungen. Aufgrund der Schichtgitterstruktur von Graphit können also Atome oder kleine Moleküle zwischen den Kohlenstoffschichten eingelagert bzw. interkaliert werden. Hierdurch entsteht sogenannter Blähgraphit, synonym auch als Blähsalz oder GIC (*Graphite Intercalation Compound*). Hochwertige Blähgraphite weisen einen großen Anteil interkalierter Schichten auf, wobei es sich bei den eingelagerten Molekülen meist um Schwefel- oder Stickstoffverbindungen handelt. Derartige Blähgraphite sind zahlreich im Handel.

Wenn dieser expandierbare Graphit hitzeausgedehnt wird, dehnt er sich volumetrisch stark aus und bildet dabei eine feuerfeste Kohlenstoffmatrix mit niedriger Dichte. Die expandierten Graphitpartikel behalten dabei die Eigenschaften des ursprünglichen Graphits, insbesondere seine Hitze- und Chemikalienbeständigkeit, so dass das Hauptanwendungsgebiet von Blähgraphit der Brandschutz ist. Unter Hitzeeinwirkung werden die Schichten des Blähgraphits durch Thermolyse sozusagen ziehharmonikaartig auseinandergetrieben, so dass die Graphitflocken expandieren. Die Temperatur der Expansion ist abhängig von der jeweiligen Blähgraphitsorte, wobei die Expansion nahezu schlagartig erfolgen kann. Bei freier Expansion kann das Endvolumen das Mehrhundertfache des Ausgangsvolumens erreichen, wobei die Eigenschaften des Blähgraphits, insbesondere die Starttemperatur und das Blähvermögen, hauptsächlich von der Interkalationsgüte und von der Interkalationsverbindung bestimmt werden.

Blähgraphit wird als Flammschutz bereits erfolgreich in Polyurethanschäumen, Polyolefinfolien, Beschichtungen oder Kautschuk- und Gummiprodukten eingesetzt. Für die jeweilige Anwendung stehen oftmals zahlreiche Produkte mit unterschiedlichen Kohlenstoffgehalten und Partikelgrößen zur Verfügung.

So ist beispielsweise aus der EP 0 192 888 A2 ein flammwidriger elastischer Polyurethanschaumstoff bekannt, welcher aus einem Schaumstoffreaktionsgemisch mit einem Polyol und einem organischem Polyisocyanat hergestellt wird, wobei dem Reaktionsgemisch ein Blähgraphit beigemischt wird. Bei dem dort beschriebenen Verfahren besteht jedoch die Gefahr, dass bei der Einlagerung des Blähgraphits die Zellstruktur des aufschäumenden Schaumstoffs gestört wird, so dass sich dadurch schlechtere Dauergebrauchseigenschaften des Schaumstoffs ergeben. Auch wird im Fall der Expansion unter Hitzeeinwirkung (z. B. im Brandfall) infolge der starken Expansion des Blähgraphits eine nur noch unzureichende Strukturstabisierung des aufgeschäumten Materials erreicht.

Weiterhin betrifft die WO 90/11318 A1 einen flammwidrigen elastischen Polyurethanschaum, wobei der dort beschriebene Schaumstoff unveränderte Dauergebrauchseigenschaften aufweisen soll. Zu diesem Zweck wird bei der Herstellung dem Schaumstoffreaktionsgemisch aus Polyol und Polyisocyanat ein Anteil von Blähgraphit in Plättchenform als flammhemmendes Mittel zugesetzt, wobei die Plättchen des Blähgraphits die Größenordnung der entstehenden Schaumstoffzellwände aufweisen, so dass sie in den aufschäumenden Schaumstoff derart eingelagert werden, dass sie zumindest einen Teil der Zellwände ausbilden können. Auch bei dem dort beschriebenen Schaumstoffsystem besteht der entscheidende Nachteil, dass im Fall der Expansion des Blähgraphits, insbesondere im Brandfall, kein langzeitstabiles und strukturstabiles Material erhalten wird, was einer Brandbelastung über einen längeren Zeitraum standzuhalten vermag.

Das Brandschutzmaterial kann
(A) mindestens ein wärmeexpandierbares Intumeszenzmittel, insbesondere ein Blähsalz und/oder einen Blähgraphit;
(B) zumindest ein Kunststoffmaterial (z. B. Polyurethan) und/oder dessen Vorläufer (d. h. die Ausgangsverbindungen bzw. Edukte); und
(C) eine Mischung auf Basis mindestens eines Aluminiumsilikates (Alumosilikates) einerseits und mindestens eines Salzes andererseits;
aufweisen.

Das flamm- bzw. brandbeständige Brandschutzmaterial enthält neben dem Intumeszenzmittel (z. B. Blähgraphit) und dem Kohlenstoffmaterial bzw. dessen Vorläufern (z. B. Polyurethan bzw. die entsprechenden Ausgangsverbindungen, d. h. Isocyanate und z. B. Polyole) zusätzliche eine Mischung aus Aluminiumsilikat (z. B. Zeolith) einerseits und Salz (z. B. Alkali-, Erdalkali- oder Aluminiumsalz einer organischen Säure, vorzugsweise Calciumstearat, und/oder aber ein Fettsäuresalz, insbesondere C₁₀-C₃₀-Fettsäuresalz) andererseits.

Infolge der zusätzlichen Inkorporierung der Aluminiumsilikat/Salz-Mischung in das erfindungsgemäße flamm- bzw. brandbeständige Brandschutzmaterial wird ein deutlich verbessertes Brandschutzverhalten erreicht: Unter Hitzeeinwirkung, insbesondere im Brandfall, sintert das Intumeszenzmittel, insbesondere der Blähgraphit, mit der Aluminiumsilikat/Salz-Mischung zusammen, so dass das Intumeszenzmittel, insbesondere der Blähgraphit, stabil gebunden wird und sich eine brand- bzw. flammresistente Verkrustung ausbildet. Dies führt dazu, dass eine verlängerte Brandresistenz bzw. Flammbeständigkeit erreicht wird.

Im Rahmen der vorliegenden Erfindung ist das wärmeexpandierbare Intumeszenzmittel (A) insbesondere ein Blähsalz und/oder ein Blähgraphit. Vorteilhafterweise weist der Blähgraphit einen Kohlenstoffgehalt von mindestens 90 Gew.-%, vorzugsweise mindestens 95 Gew,-%, bezogen auf den Blähgraphit auf. In erfindungsgemäß bevorzugter Weise wird ein pH-neutrales Blähgraphit ausgewählt.

Üblicherweise ist das Intumeszenzmittel (A), insbesondere der Blähgraphit, teilchenförmig, vorzugsweise plättchenförmig, ausgebildet. Dabei weisen die Teilchen des Intumeszenzmittels (A) im allgemeinen Teilchengrößen von 0,01 bis 2 mm, vorzugsweise 0,05 bis 1,5 mm, vorzugsweise 0,1 bis 1 mm, auf. Vorteilhafterweise weisen mindestens 50 %, insbesondere mindestens 60 %, vorzugsweise mindestens 70 %, besonders bevorzugt mindestens 80 %, der Teilchen des Intumeszenzmittels (A) Teilchengrößen von mindestens 200 µm, vorzugsweise mindestens 300 µm auf.

Üblicherweise wird das Intumeszenzmittel (A) derart ausgewählt, dass die Wärmeexpansion des Intumeszenzmittels (A), insbesondere des Blähgraphits, ab Temperaturen von 120 °C, insbesondere ab Temperaturen von 150 °C, vorzugsweise ab Temperaturen von 160 °C, einsetzt.

Üblicherweise wird ein Intumeszenzmittel (A), insbesondere ein Blähgraphit, eingesetzt, das eine Wärmeexpansion bei 600 °C von mindestens 50 cm³/g, insbesondere mindestens 75 cm³/g, vorzugsweise mindestens 90 cm³/g, besonders bevorzugt mindestens 95 cm³/g, und/oder eine Wärmeexpansion bei 1.000 °C von mindestens 100 cm³/g, insbesondere mindestens 200 cm³/g, vorzugsweise mindestens 250 cm³/g, besonders bevorzugt mindestens 300 cm³/g, aufweist.

Die Mengen an Intumeszenzmittel (A), insbesondere Blähgraphit, in dem erfindungsgemäßen Brandschutzmaterial kann in weiten Bereichen variieren. Im allgemeinen enthält das Brandschutzmaterial als Intumeszenzmittel (A), insbesondere Blähgraphit, in Mengen von 10 bis 50 Gew.-%, insbesondere 15 bis 45 Gew.-%, vorzugsweise 20 bis 30 Gew.-%, bezogen auf das Brandschutzmaterial.

Das Kunststoffmaterial und/oder dessen Vorläufer (B) können in dem erfindungsgemäßen Brandschutzmaterial gleichermaßen in stark variierenden Mengen vorhanden sein. Insbesondere kann das Kunststoffmaterial und/oder dessen Vorläufer (B) in dem erfindungsgemäßen Brandschutzmaterial, bezogen auf das Brandschutzmaterial, in Mengen von 20 bis 90 Gew.-%, insbesondere 30 bis 80 Gew.-%, vorzugsweise 40 bis 70 Gew.-%, vorhanden sein.

Bei dem Kunststoffmaterial (B) kann es sich insbesondere um ein Matrix bildendes, insbesondere eine Schaumstruktur bildendes Polymer handeln. Beispielsweise kann das Kunststoffmaterial (B) ein Polyurethan sein.

Weiterhin kann die Komponente (B) eine Mischung mindestens eines Isocyanats zusammen mit mindestens einer isocyanatreaktiven Verbindung, insbesondere einem Polyol, und/oder mindestens ein durch Reaktion mindestens eines Isocyanats mit mindestens einer isocyanatreaktiven Verbindung, insbesondere einem Polyol, erhältliches Polyurethan umfassen. Zu weitergehenden Einzelheiten bezüglich dieser Ausführungsform der vorliegenden Erfindung kann auf die Ansprüche 9 bis 16 verwiesen werden.

Was die Menge an Mischung (C) in dem erfindungsgemäßen Brandschutzmaterial anbelangt, so kann diese gleichermaßen in weiten Bereichen variieren. Üblicherweise enthält das erfindungsgemäße Brandschutzmaterial die Mischung (C) in Mengen von 1 bis 30 Gew.-%, insbesondere 2 bis 20 Gew.-%, vorzugsweise 4 bis 18 Gew.-%, bezogen auf das erfindungsgemäße Brandschutzmaterial.

Üblicherweise enthält die Mischung (C) das Aluminiumsilikat einerseits und das Salz anderseits in einem gewichtsbezogenen Aluminiumsilikat/Salz-Mengenverhältnis im Bereich von 0,1 : 1 bis 10 ; 1, insbesondere 0,5 : 1 bis 2 : 1, vorzugsweise 0,75 : 1 bis 1,25 : 1, besonders bevorzugt etwa 1 : 1.

Wie bereits zuvor ausgeführt, ist das Aluminiumsilikat der Mischung (C) bevorzugtermaßen ein Zeolith.

Was das Salz der Mischung (C) anbelangt, so können hier Alkali-, Erdalkali- oder Aluminiumsalze, insbesondere Erdalkalisalze, bevorzugt Calciumsalze, insbesondere Salze von organischen Säuren, ganz besonders bevorzugt Calciumstearat, zum Einsatz kommen. Erfindungsgemäß bevorzugt sind Fettsäuresalze, insbesondere C₁₀-C₃₀-Fettsäuresalze. Insbesondere Calciumstearat ist außerdem im Hinblick auf die Verarbeitungseigenschaften des erfindungsgemäßen Brandschutzmaterials, insbesondere sein Gleit- und Fließverhalten, positiv.

Vorteilhafterweise weist das Salz der Mischung (C) einen Schmelzpunkt auf, welcher höchstens um 50 °C, insbesondere höchstens um 30 °C, vorzugsweise um 20 °C, von der Temperatur abweicht, bei welcher die Wärmeexpansion des Intumeszenzmittels (A), insbesondere des Blähgraphits, einsetzt. Besonders bevorzugt ist es, wenn der Schmelzpunkt unterhalb oder in etwa bei der Temperatur liegt, bei welcher die Wärmeexpansion des Intumeszenzmittels (A) einsetzt.

Im allgemeinen liegt der Schmelzpunkt des Salzes der Mischung (C) im Bereich von 100 °C bis 200 °C, insbesondere 120 °C bis 180 °C, vorzugsweise 130 °C bis 160 °C.

Vorteilhafterweise enthält das erfindungsgemäße Brandschutzmaterial das Aluminiumsilikat, insbesondere den Zeolith, und/oder das Salz teilchenförmig. Dabei kann das Aluminiumsilikat insbesondere einen mittleren Teilchendurchmesser D50 von höchstens 10 µm, insbesondere höchstens 5 µm, vorzugsweise höchstens 3 µm, und/oder einen mittleren Teilchendurchmesser D90 von höchstens 50 µm, insbesondere höchstens 20 µm, vorzugsweise höchstens 15 µm, aufweisen. Im allgemeinen weist das Salz der Mischung (C) Teilchengrößen im Bereich von 0,001 bis 2 mm, vorzugsweise 0,005 bis 1,5 mm, vorzugsweise 0,01 bis 1 mm, auf.

Weiterhin kann das erfindungsgemäße Brandschutzmaterial außerdem mindestens ein Fasermaterial (D), insbesondere ein Kunststoff-Fasermaterial, vorzugsweise in Form von Polyacrylnitrilfasem, aufweisen. Dieses Fasermaterial dient zur zusätzlichen Steigerung der Festigkeit bzw. zu Zwecken der Armierung des erfindungsgemäßen Brandschutzmaterials, insbesondere nach Wärmeexpansion des Intumeszenzmittels. Die Mengen am inkorporierten Fasermaterial kann in weiten Bereichen variieren; insbesondere ist das Fasermaterial in Mengen von 0,5 bis 5 Gew.-%, vorzugsweise 1 bis 2 Gew.-%, bezogen auf das erfindungsgemäße Brandschutzmaterial, vorhanden.

Ein Vorteil des erfindungsgemäßen Brandschutzmaterials ist darin zu sehen, daß es frei von Halogenen und/oder Weichmachern ausgebildet ist. Weiterhin ist das erfindungsgemäße Brandschutzmaterial frei von Phosphorsäureestern, insbesondere frei von toxischen organischen Phosphorsäureestern, ausgebildet, da seine intrinsische Brandfestigkeit bzw. Flammbeständigkeit ausreichend groß ist, um ohne die vorgenannten Substanzen auszukommen.

Das erfindungsgemäße Brandschutzmaterial ist unter Normalbedingungen (20 °C, 101325 Pa) fest ausgebildet, d. h. liegt im festen Aggregatzustand vor. Mit anderen Worten liegt das erfindungsgemäße Brandschutzmaterial unter Normalbedingungen als festes, insbesondere homogenes Gemisch der einzelnen Inhaltsstoffe vor.

Von weiterem Vorteil ist, dass das erfindungsgemäße Brandschutzmaterial selbstklebend und/oder eigenklebrig bzw. adhäsiv ausgebildet ist. Auf diese Weise kann es ohne weiteres auf die entsprechenden Materialien appliziert werden (z. B. Rohr- und Leitungssysteme), wo es dann aufgrund seiner Eigenadhäsion verbleibt. Dennoch ist es nicht ausgeschlossen, das erfindungsgemäße Brandschutzmaterial nachträglich unter Verwendung eines zusätzlichen Klebstoffs zu verkleben, auch wenn dies die weniger bevorzugte Ausführungsform ist.

Wie zuvor geschildert, ist das erfindungsgemäße Brandschutzmaterial bei Raumtemperatur fest und/oder formstabil ausgebildet, besitzt jedoch eine gewisse Elastizität.

Ein weiterer Vorteil des erfindungsgemäßen Brandschutzmaterials ist darin zu sehen, dass es beständig gegenüber dem Einwirken von Wasser und/oder von Gasen, insbesondere Luft, Sauerstoff oder Kohlendioxid, und/oder von Chemikalien, insbesondere Wasserglas ist.

Ein weiterer Vorteil ist, dass das erfindungsgemäße Brandschutzmaterial zu Formkörpern und/oder Formteilen verarbeitbar ist (z. B. streifenförmige Materialien etc.). Zu diesem Zweck ist das erfindungsgemäße Brandschutzmaterial extrudierbar und/oder gießbar ausgebildet, wobei es zu diesem Zweck oberhalb seiner Fließtemperatur erwärmt werden muss, vorteilhafterweise aber unterhalb der Wärmeexpansionstemperatur des Intumeszenzmittels.

Gemäß einem besonders vorteilhaften Aspekt der vorliegenden Erfindung enthält das Brandschutzmaterial:
(A) Blähgraphit, insbesondere in Mengen von 10 bis 50 Gew.-%, insbesondere 15 bis 45 Gew.-%, vorzugsweise 20 bis 30 Gew,-%, bezogen auf das Brandschutzmaterial, vorzugsweise mit Teilchengrößen von mindestens 200 µm, vorzugsweise mindestens 300 µm, für 80 % der Blähgraphitteilchen;
(B) mindestens ein matrixbildendes, insbesondere eine Schaumstruktur bildendes Polymer, vorzugsweise ein Polyurethan, insbesondere in Mengen von 20 bis 90 Gew.-%, insbesondere 30 bis 80 Gew.-%, vorzugsweise 40 bis 70 Gew.-%, bezogen auf das Brandschutzmaterial;
(C) eine Mischung auf Basis mindestens eines Zeoliths einerseits und mindestens eines Alkali-, Erdalkali- oder Aluminiumsalzes einer organischen Säure, besonders bevorzugt Calciumstearat, andererseits, insbesondere in Mengen von 1 bis 30 Gew.-%, insbesondere 2 bis 20 Gew.-%, vorzugsweise 4 bis 18 Gew.-%, bezogen auf das Brandschutzmaterial, und/oder insbesondere mit einem gewichtsbezogenen Zeolith/Salz-Mengenverhältnis im Bereich von 0,1 : 1 bis 10: 1, insbesondere 0,5 : 1 bis 2 : 1, vorzugsweise 0,75 : 1 bis 1,25 : 1, besonders bevorzugt etwa 1 : 1;
(D) gegebenenfalls mindestens ein Fasermaterial, insbesondere Kunststoff-Fasermaterial, vorzugsweise in Form von Polyacrylnitrlfasern, insbesondere in Mengen von 0,5 bis 5 Gew.-%, vorzugsweise 1 bis 2 Gew.-%, bezogen auf das Brandschutzmaterial.

Ein weiterer Aspekt der vorliegenden Erfindung ist die erfindungsgemäße Verwendung des zuvor beschriebenen flamm- und/oder brandbeständigen, wärmeexpandierbaren organisch-anorganisch basierten Brandschutzmaterials nach der vorliegenden Erfindung, insbesondere der zuvor beschriebenen erfindungsgemäßen Intumeszenzmasse, wie sie in den entsprechenden Verwendungsansprüchen definiert ist.

So lässt sich das erfindungsgemäße Brandschutzmaterial beispielsweise zur Ausrüstung von Hohlräumen, von Öffnungen, von Rohr- und Leitungssystemen (z. B. Kabelkanälen, Kabelrohren, Kabelschächten, Lüftungskanälen, Lüftungsrohren, Lüftungsschächten oder dergleichen), von Türen (z. B. für Dichtungen oder Füllmaterialien für Türen), von Fenstern oder von Fugen einsetzen.

So ermöglicht das erfindungsgemäße Brandschutzmaterial beispielsweise ein flamm- und/oder brandbeständiges Verschließen bzw. ein wenigstens partielles Ausfüllen von Hohlräumen von Öffnungen, von Rohr- und Leitungssystemen, insbesondere Kabelkanälen, Kabelrohren, Kabelschächten, Lüftungskanälen, Lüftungsrohren, Lüftungsschächten oder dergleichen, von Türen, von Fenstern oder von Fugen im Brandfall.

Eine mögliche Anwendung bzw. Applikation erfolgt dadurch, dass das Brandschutzmaterial im fließfähigen Zustand (vorzugsweise unterhalb der Wärmeexpansionstemperatur) auf das Gehäuse aufgetragen, insbesondere gegossen, extrudiert oder dergleichen, wird, woran sich ein Abkühlvorgang anschließt, so dass das aufgetragene Brandschutzmaterial infolge seiner Eigenadhäsion auf den Gehäuseflächen zum Haften kommt.

Gemäß einer alternativen, erfindungsgemäß weniger bevorzugten Ausführungsform kann aber auch das Brandschutzmaterial zunächst in den fließfähigen Zustand überführt werden, und zu einem Formteil verarbeitet werden, insbesondere mittels Gießen, Extrusion oder dergleichen, wobei dies vorteilhafterweise bei Temperaturen unterhalb der Wärmeexpansionstemperatur des Brandschutzmaterials erfolgt, woran sich ein Abkühlvorgang anschließt. Abschließend wird das so erhaltene Formteil aus dem erfindungsgemäßen Brandschutzmaterial auf oder in das zu behandelnde Material aufgebracht bzw. appliziert, beispielsweise mittels Verkleben.

Versuche der Anmelderin mit dem erfindungsgemäßen Brandschutzmaterial haben gezeigt, dass das erfindungsgemäße Brandschutzmaterial im Brandfall gezielt und ausreichend stark selbsttätig aufschäumt und im Rahmen von Brandtests mehr als 90 Minuten lang stabil bleiben und auf diese Weise zuverlässig die betreffenden Bereiche, welche es zu schützen gilt, von dem eigentlichen Brandherd abschirmt.

Weitere Ausgestaltungen, Abwandlungen und Variationen der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird nachfolgend anhand von Ausführungsbeispielen veranschaulicht, welche die vorliegende Erfindung jedoch keinesfalls beschränken.

### AUSFÜHRUNGSBEISPIELE:

### Beispiele 1 und 2:

Zwei erfindungsgemäße Brandschutzmaterialien werden entsprechend den folgenden Spezifikationen hergestellt:

| Bestandteil | Brandschutzmaterial I Menge in Gew.-% | Brandschutzmaterial II Menge in Gew.-% |
|---|---|---|
| Polyol 1 | 24,846 | 22,203 |
| Polyol 2 | 24,846 | 22,203 |
| Isocyanat (MDI) | 16,399 | 14,636 |
| Katalysator (TEDA) | 0,068 | 0,060 |
| Blähgraphit pH = 7 | 27,629 | 24,690 |
| Zeolith | 2,485 | 7,549 |
| Calciumstearat | 2,485 | 7,549 |
| Polyacrylnitrilfasern | 1,242 | 1,110 |
| Summe | 100 | 100 |

Die vorgenannten Brandschutzmaterialien werden wie folgt hergestellt: Alle Mischungsbestandteile mit Ausnahme des Isocyanats, wie sie in der vorstehenden Tabelle spezifiziert worden sind, werden in einem Rührkessel vorgelegt und bei Raumtemperatur homogenisiert und nachfolgend auf Temperaturen von 30 bis 40 °C erwärmt. Anschließend wird das Isocyanat (MDI) zugegeben und weiter gerührt. Es setzt die Additionsreaktion zwischen den Polyolen und dem Isocyanat zum Polyurethankunststoff ein, in den die übrigen Inhaltsstoffe eingelagert sind. Auf diese Weise werden die erfindungsgemäßen Brandschutzmaterialien I und II erhalten.

### Beispiel 3:

In einem ersten Ansatz werden die Brandschutzmaterialien I und II unterhalb ihrer Wärmeexpansionstemperatur zu flachen Streifen (ca. 2 bis 4 cm Dicke) gegossen und erkalten gelassen. Anschließend werden die Streifen zur Innenauskleidung des Kabelkanals verwendet und hierin flächendeckend, d. h. vollflächig, appliziert.

In einem zweiten Ansatz werden die erfindungsgemäßen Brandschutzmateria- - lien direkt in den Kabelkanal gegossen und dort erkalten gelassen, so dass gleichermaßen eine vollflächige Innenbeschichtung mit den erfindungsgemäßen Brandschutzmaterialien resultiert.

### Beispiel 4:

Die in den vorangehenden Beispielen beschichteten Kabelkanäle werden unter Einsatzbedingungen getestet. Hierzu wird in einem Brandschutztest die Wärmeexpansion der Materialien ausgelöst, welche bei Temperaturen von ca. 180 bis 200 °C einsetzt. Bei allen erfindungsgemäßen Brandschutzmaterialien erfolgt in allen vier Ausführungsbeispielen eine gezielte und starke Expansion unter Flammeinwirkung, welche zu einem Verschließen des Kabelkanals führt, wobei der Brandtests über 90 Minuten durchgeführt wird und die erfindungsgemäßen Brandschutzmaterialien über diesen Zeitraum stabil bleiben und einen zuverlässigen Brandschutz liefern. Insbesondere bleibt das ausgeschäumte Material formstabil über diesen Zeitraum erhalten und verschließt dicht den Kabelkanal.

Durch die gezielte Inkorporierung einer Mischung, aus Aluminiumsilikat, insbesondere Zeolith, einerseits und Salz, insbesondere Calciumstearat, andererseits (vorzugsweise in etwa gleichen Mengen) kann eine gezielte Verbesserung im Brandschutzverhalten von Blähgraphit enthaltenden Kunststoffmaterialien, insbesondere Polyurethanmaterialien, erreicht werden kann, insbesondere eine verlängerte Brandfestigkeit und erhöhte Formstabilität, was sich möglicherweise (ohne sich auf eine bestimmte Theorie festlegen zu wollen) durch Sintervorgänge in den erfindungsgemäßen Intumeszenzmaterialien erklären lässt (d. h. Versintern von Zeolith und Calciumstearat zusammen mit dem Blähgraphit), so dass es im Brandfall zu gewünschten Erhärtungen, insbesondere Verkrustungen, in den erfindungsgemäßen Materialien kommt.

Die Erfindung wird nachfolgend anhand eines Ausführungsbeispiels unter Bezugnahme auf die Zeichnung weiter beschrieben. In der Zeichnung zeigen
- Fig. 1: eine Draufsicht auf eine erfindungsgemäße Kabeldurchführung in einer Explosionsdarstellung und
- Fig. 2: eine Querschnittsansicht des Gehäuses der in Fig. 1 dargestellten Kabeldurchführung.

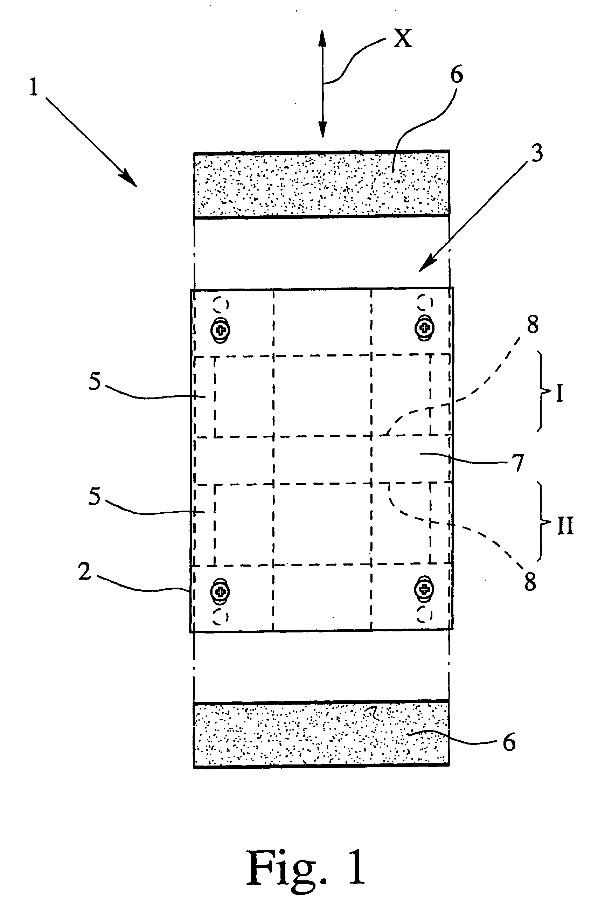

In Fig. 1 ist eine Brandschutzkabeldurchführung 1 zur Abschottung von Wand- oder Deckendurchbrüchen für Kabel, Rohre und dergleichen dargestellt, die ein beidseitig geöffnetes Gehäuse 2 mit einem einen Kabelkanal 3 bildenden Innenraum 3 aufweist. Die Kabeldurchführung 1 weist zwei voneinander beabstandete und auf der Innenseite 4 des Gehäuses 2 an dem Gehäuse 2 befestigte Brandschutzstreifen 5 aus einem intumeszenten Brandschutzmaterial auf, wobei die Brandschutzstreifen 5 den Innenraum 3 des Gehäuses 2 bei großer Wärme bzw. im Brandfall im wesentlichen vollständig abschotten, um den Übertritt von Rauchgas und/oder Flammen über den Kabelkanal 3 in Kabelrichtung X zu verhindern. Darüber hinaus weist die Kabeldurchführung 1 zwei Brandschutzstopfen 6 auf, deren Form mit der Gehäusekontur korrespondiert. Hierdurch wird eine optimale Abschottung und Abdichtung zwischen den Brandschutzstopfen 6 und dem Gehäuse 2 gewährleistet, wobei die Brandschutzstopfen 6 in das Gehäuse 2 einsteckbar sind und entsprechende Öffnungen zum Hindurchführen von Kabeln aufweisen.

Die beiden Brandschutzstreifen 5 sind im nicht-expandierten Grundzustand durch einen Spalt 7 voneinander getrennt. Kommt es im Brandfall zu einem Aufschäumen bzw. Expandieren der Brandschutzstreifen 5, führt dies zum einen dazu, dass jeder Brandschutzstreifen 5 den Innenraum 3 vollständig zuschäumt bzw, ausschäumt und in Kabelrichtung X verschließt, so dass im Ergebnis an zwei Stellen I, II ein Raumabschluß und eine Abschottung des Kabelkanals bewirkt wird. Dadurch wird der Übertritt von Rauchgasen und Flammen im Brandfall wirkungsvoll verhindert. Je nach Wahl des Brandschutzmaterials kann es dazu kommen, dass die Brandschutzstreifen 5 beim Expandieren im Bereich der benachbarten Längsseiten 8 zusammenwachsen, so dass sich in Kabelrichtung X eine im wesentlichen über die Bereiche I, II und den Spalt 7 erstreckende unterbrechungslose Ausschäumung des Innenraums 3 ergibt.

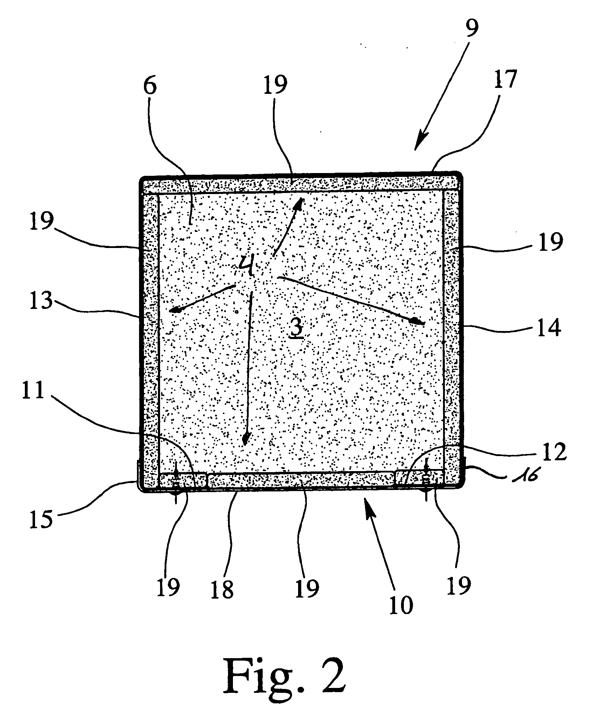

Wie sich insbesondere aus Fig. 2 ergibt, wird das Gehäuse 2 durch ein oberes Gehäuseteil 9 und ein unteres Gehäuseteil 10 gebildet. Das obere Gehäuseteil 9 ist U-förmig ausgebildet und mit nach innen abgewinkelten streifenförmigen Randabschnitten 11, 12 der Seitenwände 13, 14 auf das den Boden bildende untere Gehäuseteil 10 aufgesetzt und mit dem unteren Gehäuseteil 10 verschraubt. Das untere Gehäuseteil 10 weist nach oben abgewinkelte Randabschnitte 15, 16 auf, die die Seitenwände 13, 14 im Bereich der unteren Längskanten umgreifen.

Die Brandschutzstreifen 5 sind auf der Innenseite 4 des Gehäuses 2 an dem Gehäuse 2 befestigt, wobei die Brandschutzstreifen 5 an den Seitenwänden 13, 14, der Deckelwand 17 und der Bodenwand 18 umlaufend angeordnet verklebt sind, so dass von jedem Brandschutzstreifen 5 eine unterbrechungslose Brandschutzbeschichtung gebildet wird, die sich entlang der gesamten Innenkontur des Gehäuses 2 erstreckt. Die beiden Brandschutzstreifen 5 sind dabei parallel zueinander und symmetrisch zur Mittelquerachse des Gehäuses 2 angeordnet. Es versteht sich, dass bei zylindrischer Ausbildung des Gehäuses 2 der Brandschutzstreifen 5 auch umlaufend an der inneren Mantelfläche angeordnet sein kann.

Wie sich aus Fig. 2 ergibt, ist der Brandschutzstreifen 5 mehrteilig ausgebildet und wird durch insgesamt sechs Streifenstücke 19 gebildet. Im Bereich des unteren Gehäuseteils 10 sind drei unterschiedlich breite Streifenstücke 19 vorgesehen. Die Streifenstücke 19 liegen unmittelbar gegeneinander an, so dass sich eine unterbrechungslose Beschichtung des Gehäuses 2 im Bereich der Brandschutzstreifen 5 ergibt. Durch die dreiteilige Ausbildung des Brandschutzstreifens 5 im Bereich des unteren Gehäuseteils 10 ist es möglich, eine vollflächige Anlage des Brandschutzstreifens 5 auch im Bereich der Bodenwand 18 einerseits und der beiden die Bodenwand 18 überlappenden Randabschnitte 11, 12 zu gewährleisten. Im Ergebnis erstreckt sich jeder Brandschutzstreifen 5 unterbrechungslos über die gesamte Länge der Innenkontur des Gehäuses 2 und liegt im wesentlichen vollflächig an jeder Stelle der Innenkontur gegen das Gehäuse 2 an. Durch die Mehrstückigkeit wird sichergestellt, dass sich die Brandschutzstreifen 5 in einfacher Weise an dem Gehäuse 2 befestigen lassen. Im übrigen verbleiben im Brandfall keine Spalte oder dergleichen zwischen den Streifenstücken 19 und dem Gehäuse 2, was den Durchtritt von Rauchgasen ermöglichen könnte.

Die Brandschutzstreifen 5 enthalten wenigstens ein wärmeexpandierbares Intumeszenzmittel, wenigstens ein nicht aufgeschäumtes Kunststoffmaterial und/oder dessen Vorläufer und eine Mischung auf Basis von wenigstens einem Aluminiumsilikat einerseits und wenigstens einem Salz andererseits. Die Brandschutzstopfen 6 enthalten neben dem Intumeszenzmittel und der Mischung auf Basis eines Aluminiumsilikates und eines Salzes ein aufgeschäumtes, eine Schaumstruktur aufweisendes Kunststoffmaterial. Insbesondere handelt es sich bei dem Kunststoffmaterial um einen Polyurethanschaum.

Die Brandschutzstreifen 5 sind somit im Gegensatz zu dem Brandschutzstopfen 6 als nicht-aufgeschäumte Brandschutzpakete ausgebildet, die eine nur geringe Elastizität und eine hohe Steifigkeit aufweisen.

## Patentansprüche

1. Brandschutz-Kabeldurchführung (1) zur Abschottung von Wand- oder Deckendurchbrüchen für Kabel, Rohre und dergleichen, aufweisend ein beidseitig geöffnetes Gehäuse (2) mit einem einen Kabelkanal bildenden Innenraum (3), wobei wenigstens zwei voneinander beabstandete und auf der Innenseite des Gehäuses (2) an dem Gehäuse (2) befestigte Brandschutzstreifen (5) aus einem bei großer Wärme bzw. im Brandfall expandierenden intumeszenten Brandschutzmaterial vorgesehen sind, wobei die Brandschutzstreifen (5) den Innenraum (3) des Gehäuses (2) bei großer Wärme bzw, im Brandfall im Wesentlichen vollständig in Kabelrichtung (X) abschotten, **dadurch gekennzeichnet, dass** an wenigstens einer Wandung des Gehäuses eine Lochung mit einer Vielzahl von Löchern vorgesehen ist.

2. Brandschutz-Kabeldurchführung nach Anspruch 1, **dadurch gekennzeichnet, dass** die Brandschutzstreifen (5) auf der Innenseite des Gehäuses umlaufend angeordnet sind.

3. Brandschutz-Kabeldurchführung nach Anspruch 1 oder 2, **dadurch gekennzeichnet, dass** wenigstens ein Brandschutzstreifen (5) mehrteilig ausgebildet ist.

4. Brandschutz-Kabeldurchführung (1) nach einem der vorhergehenden Ansprüche, **dadurch gekennzeichnet, dass** der Gesamtflächenanteil der Löcher an der Gesamtfläche einer Wandung mehr als 5 %, insbesondere mehr als 15 %, beträgt.

5. Brandschutz-Kabeldurchführung nach einem der vorhergehenden Ansprüche, **dadurch gekennzeichnet, dass** das Brandschutzmaterial enthält
(A) mindestens ein wärmeexpandierbares Intumeszenzmittel,
(B) mindestens ein Kunststoffmaterial und/oder dessen Vorläufer und
(C) eine Mischung auf Basis mindestens eines Aluminiumsilikates (Alumosilikates) einerseits und mindestens eines Salzes andererseits.

6. Brandschutz-Kabeldurchführung nach einem der vorhergehenden Ansprüche, **dadurch gekennzeichnet, dass** das wärmeexpandierbare Intumeszenzmittel (A) ein Blähsalz und/oder ein Blähgraphit ist, insbesondere wobei der Blähgraphit einen Kohlenstoffgehalt von mindestens 90 Gew.-%, vorzugsweise mindestens 95 Gew.-%, bezogen auf den Blähgraphit, aufweist und/oder insbesondere wobei der Blähgraphit pHneutral ausgebildet ist und/oder einen pH-Wert von 7 aufweist.

7. Brandschutz-Kabeldurchführung nach einem der vorhergehenden Ansprüche, **dadurch gekennzeichnet, dass** das Intumeszenzmittel (A), insbesondere der Blähgraphit, teilchenförmig, insbesondere plättchenförmig, vorliegt, insbesondere wobei die Teilchen des Intumeszenzmittels (A) Teilchengrößen im Bereich von 0,01 bis 2 mm, vorzugsweise 0,05 bis 1,5 mm, vorzugsweise 0,1 bis 1 mm, aufweisen und/oder insbesondere wobei mindestens 50 %, insbesondere mindestens 60 %, vorzugsweise mindestens 70 %, besonders bevorzugt mindestens 80 %, der Teilchen des Intumeszenzmittels (A) Teilchengrößen von mindestens 200 µm, vorzugsweise mindestens 300 µm, aufweisen.

8. Brandschutz-Kabeldurchführung nach einem der vorhergehenden Ansprüche, **dadurch gekennzeichnet, dass** das Kunststoffinaterial (B) ein matrixbildendes, insbesondere eine Schaumstruktur bildendes Polymer ist und/oder dass das Kunststoffmaterial (B) ein Polyurethan ist und/oder dass die Komponente (B) eine Mischung mindestens eines Isocyanats zusammen mit mindestens einer isocyanatreaktiven Verbindung, insbesondere einem Polyol, und/oder mindestens ein durch Reaktion mindestens eines Isocyanats mit mindestens einer isocyanatreaktiven Verbindung, insbesondere einem Polyol, erhältliches Polyurethan umfaßt,

9. Brandschutz-Kabeldurchführung nach einem der vorhergehenden Ansprüche, **dadurch gekennzeichnet, dass** das Brandschutzmaterial das Isocyanat in Mengen von 5 bis 25 Gew.-%, insbesondere 10 bis 20 Gew.-%, bezogen auf das Brandschutzmaterial, enthält und/oder dass das Brandschutzmaterial die isocyanatreaktive Verbindung, insbesondere das Polyol, in Mengen von 20 bis 80 Gew.-%, insbesondere 30 bis 70 Gew.-%, vorzugsweise 35 bis 60 Gew.-%, bezogen auf das Brandschutzmaterial, enthält.

10. Brandschutz-Kabeldurchführung nach einem der vorhergehenden Ansprüche, **dadurch gekennzeichnet, dass** in der Mischung von Isocyanat und isocyanatreaktiver Verbindung, insbesondere Polyol, das Verhältnis isocyanatreaktiven Verbindung/Isocyanat derart ist, dass ein Überschuss an NCO-Gruppen vorliegt, insbesondere mit der Maßgabe, dass das Verhältnis von Anzahl der NCO-Gruppen des Isocyanats zu isocyanatreaktiven Gruppen, insbesondere OH-Gruppen, der isocyanatreaktiven Verbindung, insbesondere des Polyols, mindestens 0,90, vorzugsweise mindestens 1, beträgt und insbesondere im Bereich zwischen 1 : 1 bis 1,5 : 1, vorzugsweise 1,05 : 1 bis 1,2 : 1, variiert, und/oder insbesondere mit der Maßgabe, dass der Gehalt an freien, vorzugsweise endständigen NCO-Gruppen in dem erhaltenen Additionsprodukt, insbesondere Polyurethan, 0,01 Gew.-% bis 20 Gew.-%, insbesondere 0,1 Gew.-% bis 10 Gew.-%, bezogen auf das Additionsprodukt, beträgt.

11. Brandschutz-Kabeldurchführung nach einem der vorhergehenden Ansprüche, **dadurch gekennzeichnet, dass** das Brandschutzmaterial die Mischung (C) in Mengen von 1 bis 30 Gew.-%, insbesondere 2 bis 20 Gew.-%, vorzugsweise 4 bis 18 Gew.-%, bezogen auf das Brandschutzmaterial, enthält und/oder, dass die Mischung (C) das Aluminiumsilikat einerseits und das Salz anderseits in einem gewichtsbezogenen Aluminiumsilikat/Salz-Mengenverhältnis im Bereich von 0,1 : 1 bis 10:1, insbesondere 0,5 : 1 bis 2 : 1, vorzugsweise 0,75 : 1 bis 1,25 : 1, besonders bevorzugt etwa 1 : 1, enthält.

12. Brandschutz-Kabeldurchführung nach einem der vorhergehenden Ansprüche, **dadurch gekennzeichnet, dass** das Brandschutzmaterial weiterhin mindestens ein Fasermaterial (D) enthält, insbesondere Kunststoff-Fasermaterial, vorzugsweise in Form von Polyacrylnitrilfasern, insbesondere wobei das Fasermaterial in Mengen von 0,5 bis 5 Gew.-%, vorzugsweise 1 bis 2 Gew.-%, bezogen auf das Brandschutzmaterial,vorhanden ist.

13. Brandschutz-Kabeldurchführung nach einem der vorhergehenden Ansprüche, **dadurch gekennzeichnet, dass** das Brandschutzmaterial selbstklebend und/oder eigenklebrig und/oder adhäsiv ausgebildet ist und/oder dass das Brandschutzmaterial bei Raumtemperatur fest und/oder formstabil ausgebildet ist und/oder dass das Brandschutzmaterial beständig gegenüber dem Einwirken von Wasser und/oder von Gasen, insbesondere Luft, Sauerstoff oder Kohlendioxid, und/oder von Chemikalien, insbesondere Wasserglas, ist.

14. Brandschutz-Kabeldurchführung nach einem der vorhergehenden Ansprüche, **dadurch gekennzeichnet, dass** das Brandschutzmaterial enthält:
(A) Blähgraphit, insbesondere in Mengen von 10 bis 50 Gew.-%, insbesondere 15 bis 45 Gew.-%, vorzugsweise 20 bis 30 Gew.-%, bezogen auf das Brandschutzmaterial, vorzugsweise mit Teilchengrö-βen von mindestens 200 µm, vorzugsweise mindestens 300 µm, für 80 % der Blähgraphitteilchen;
(B) mindestens ein matrixbildendes, insbesondere eine Schaumstruktur bildendes Polymer, vorzugsweise ein Polyurethan, insbesondere in Mengen von 20 bis 90 Gew.-%, insbesondere 30 bis 80 Gew.-%, vorzugsweise 40 bis 70 Gew.-%, bezogen auf das Brandschutzmaterial;
(C) eine Mischung auf Basis mindestens eines Zeoliths einerseits und mindestens eines Alkali-, Erdalkali- oder Aluminiumsalzes einer organischen Säure, besonders bevorzugt Calciumstearat, andererseits, insbesondere in Mengen von 1 bis 30 Gew.-%, insbesondere 2 bis 20 Gew.-%, vorzugsweise 4 bis 18 Gew.-%, bezogen auf das Brandschutzmaterial, und/oder insbesondere mit einem gewichtsbezogenen Zeolith/Salz-Mengenverhältnis im Bereich von 0,1 : 1 bis 10: 1, insbesondere 0,5 : 1 bis 2 : 1, vorzugsweise 0,75 : 1 bis 1,25 : 1, besonders bevorzugt etwa 1 : 1;
(D) gegebenenfalls mindestens ein Fasermaterial, insbesondere Kunststoff-Fasermaterial, vorzugsweise in Form von Polyacrylnitrilfasern, insbesondere in Mengen von 0,5 bis 5 Gew.-%, vorzugsweise 1 bis 2 Gew.-%, bezogen auf das Brandschutzmaterial.

## Claims

1. A fire control cable feedthrough (1) for the fire retarding sealing of wall or ceiling break throughs for cables, pipes, and the like, comprising a housing (2) that is open on both sides, having an interior space (3) forming a cable conduit, wherein at least two fire control strips (5) are provided, being made of an intumescent fire control material that expands in great heat, or in case of a fire, which are at a distance to each other and mounted on the housing (2) on the interior side of the housing (2), wherein the fire control strips (5) seal the interior space (3) of the housing (2) in a fire-retarding manner in case of great heat, or in the case of a fire, essentially completely in the direction of the cable (X), **characterized in that** a perforation having a plurality of holes is provided on at least one wall of the housing.

2. The fire control cable feedthrough according to claim 1, **characterized in that** the fire control strips (5) are circumferentially disposed on the interior side of the housing.

3. The fire control cable feedthrough according to claims 1 or 2, **characterized in that** at least one file control strip (5) is embodied in multiple parts.

4. The fire control cable feedthrough (1) according to one of the previous claims, **characterized in that** the total percentage of area of the hole on the total area of a wall is greater than 5%, in particular greater than 15%.

5. The fire control cable feedthrough according to one of the previous claims, **characterized in that** the file control material contains
(A) at least one heat-expanding intumescent agent,
(B) at least one synthetic material, and/or the precursor thereof, and
(C) a mixture based on at least one aluminum silicate (alumosilicate) on one hand, and at least a salt on the other hand.

6. The fire control cable feedthrough according to one of the previous claims, **characterized in that** the heat-expanding intumescent agent (A) is an expanding salt and/or an expanding graphite, in particular wherein the expanding graphite has a carbon content of at least 90% by weight, preferably at least 95% by weight, based on the expanding graphite, and/or in particular, wherein the expanding graphite is embodied in a pH neutral manner, and/or has a pH value of 7.

7. The fire control cable feedthrough according to one of the previous claims, **characterized in that** the intumescent agent (A), in particular the expanding graphite, is present in particle form, in particular in platelet form, in particular, wherein the particles of the intumescent agent (A) have particle sizes in the range of from 0.01 to 2 mm, preferably 0.05 to 1.5 mm, preferably 0.1 to 1 mm, and/or in particular, wherein at least 50%, in particular at least 60%, preferably at least 70%, particularly preferred at least 80% of the particles of the intumescent agent (A) have particle sizes of at least 200 µm, preferably at least 300 µm.

8. The fire control cable feedthrough according to one of the previous claims, **characterized in that** the synthetic material (B) is a matrix forming, in particular the foam structure forming polymer, and/or that the synthetic material (B) is a polyurethane, and/or that the component (B) is a mixture of at least one isocyanate together with at least one isocyanate reactive compound, in particular a polyol, and/or comprises at least one polyurethane obtainable by means of reaction of at least one isocyanate with at least one isocyanate-reactive compound, in particular a polyol.

9. The fire control cable feedthrough according to one of the previous claims, **characterized in that** the fire control material contains the isocyanate in amounts of 5 to 25% by weight, in particular 10 to 20% by weight, based on the fire control material, and/or that the fire control material contains the isocyanate-reactive compound, in particular the polyol, in amounts of 20 to 80% by weight, in particular 30 to 70% by weight, preferably 35 to 60% by weight, based on the fire control material.

10. The fire control cable feedthrough according to one of the previous claims, **characterized in that** in the mixture of isocyanate and the isocyanate-reactive compound, in particular the polyl, the ratio of isocyanate-reactive compound/isocyanate is such that an excess of NCO groups is present, in particular provided that the ratio of amount of NCO groups of the isocyanate to isocyanate-reactive groups, in particular OH groups, of the isocyanate-reactive compound, in particular of the polyol, is at least 0.90, preferably 1, and in particular varies in the range of between 1:1 to 1.5:1, preferably 1.05:1 to 1.2:1, and/or in particular provided that the content of free, preferably terminal NCO groups in the addition product obtained, in particular polyurethane, is 0.01% by weight to 20% by weight, in particular 0.1% by weight to 10% by weight, based on the addition product.

11. The fire control cable feedthrough according to one of the previous claims, **characterized in that** the fire control material contains the mixture © in amounts of 1 to 30% by weight, in particular 2 to 20% by weight, preferably 4 to 18% by weight, based on the fire control material, and/or that the mixture (C) contains the aluminum silicate on one hand, and the salt on the other hand in a weight-based aluminum silicate/salt proportion in the range of 0.1:1 to 10:1, in particular 0.5:1 to 2:1, preferably 0.75:1 to 1.25:1, particularly preferred about 1:1.

12. The fire control cable feedthrough according to one of the previous claims, **characterized in that** the fire control material further contains at least one fiber material (D), in particular a synthetic fiber material, preferably in the form of polyacrylic nitrile fibers, in particular, wherein the fiber material is present in amounts of 0.5 to 5% by weight, preferably 1 to 2% by weight, based on the fire control material.

13. The fire control cable feedthrough according to one of the previous claims, **characterized in that** the fire control material is embodied in a self-adhesive, and/or self-tacky, and/or adhesive manner, and/or that the fire control material is embodied in a solid and/or dimensionally stable manner at room temperature, and/or that the fire control material is stable from the influence of water and/or of gases, in particular air, oxygen, or carbon dioxide, and/or of chemicals, in particular sodium silicate.

14. The fire control cable feedthrough according to one of the previous claims, **characterized in that** the fire control material contains:
(A) expanding graphite, in particular in amounts of 10 to 50% by weight, in particular 15 to 45% by weight, preferably 20 to 30% by weight, based on the fire control material, preferably at particle sizes of at least 200 µm, preferably at least 300 µm, for 80% of the expanding graphite particles;
(B) at least one matrix forming, in particular a foam structure forming polymer, preferably a polyurethane, in particular in amounts of 20 to 90% by weight, in particular 30 to 80% by weight, preferably 40 to 70% by weight, based on the fire control material;
(C) a mixture based on at least one zeolite on one hand, and at least one alkali, earth alkali, or aluminum salty of an organic acid, particularly preferred calcium stearate, on the other hand, in particular in amounts of 1 to 30% by weight, in particular 2 to 20% by weight, preferably 4 to 18% by weight, based on the fire control material, and/or in particular having a weight-based zeolite/salt proportion in the range of 0.1:1 to 10:1, in particular 0.5:1 to 2:1, preferably 0.75:1 to 1.25:1, particularly preferred about 1:1;
(D) optionally at least one fiber material, in particular synthetic fiber material, preferably in the form of polyacrylic nitrile fibers, in particular in amounts of 0.5 to 5% by weight, preferably 1 to 2% by weight, based on the fire control material.

## Revendications

1. Traversée coupe-feu (1) pour câbles, pour l'isolement de traversées murales et de plafond destinées à des câbles, des tubes et analogues, comportant un boîtier (2), ouvert sur les deux côtés, comportant un espace intérieur (3) formant un caniveau pour câbles, au moins deux bandes coupe-feu (5), situées à une certaine distance l'une de l'autre, et fixées au boîtier (2) sur la face intérieure du boîtier (2), étant prévues en un matériau coupe-feu, intumescent, qui subit une dilatation en présence d'une forte chaleur ou d'un incendie, les bandes coupe-feu (5) isolant pour l'essentiel en totalité dans la direction du câble (X) l'espace intérieur (3) du boîtier (2) en présence d'une forte chaleur ou d'un incendie, **caractérisée en ce qu'**une perforation, comportant un grand nombre de trous, est prévue sur au moins une paroi du boîtier.

2. Traversée coupe-feu pour câbles selon la revendication 1, **caractérisée en ce que** la bande coupe-feu (5) est disposée tout autour de la face intérieure du boîtier.

3. Traversée coupe-feu pour câbles selon la revendication 1 ou 2, **caractérisée en ce qu'**au moins une bande coupe-feu (5) est configurée en plusieurs parties.

4. Traversée coupe-feu (1) pour câbles selon l'une des revendications précédentes, **caractérisée en ce que** l'aire totale des trous est supérieure à 5 %, en particulier supérieure à 15 % de l'aire totale d'une paroi.

5. Traversée coupe-feu pour câbles selon l'une des revendications précédentes, **caractérisée en ce que** le matériau coupe-feu contient :
(A) au moins un agent intumescent pouvant subir une dilatation à la chaleur,
(B) au moins un matériau plastique et/ou son précurseur, et
(C) un mélange à base d'au moins un silicate d'aluminium (aluminosilicate) d'une part, et d'au moins un sel d'autre part.

6. Traversée coupe-feu pour câbles selon l'une des revendications précédentes, **caractérisée en ce que** l'agent intumescent (A) pouvant subir une dilatation thermique est un sel expansé et/ou un graphite expansé, en particulier le graphite expansé présentant une teneur en carbone d'au moins 90 % en poids, de préférence d'au moins 95 % en poids par rapport au graphite expansé, et/ou en particulier le graphite expansé ayant un pH neutre et/ou un pH de 7.

7. Traversée coupe-feu pour câbles selon l'une des revendications précédentes, **caractérisée en ce que** l'agent intumescent, en particulier le graphite expansé, se présente sous forme particulaire, en particulier lamellaire, les particules de l'agent intumescent (A) ayant en particulier une granulométrie comprise dans la plage de 0,01 à 2 mm, de préférence de 0,05 à 1,5 mm, de préférence de 0,1 à 1 mm, et/ou en particulier au moins 50 %, en particulier au moins 60 %, de préférence au moins 70 %, d'une manière particulièrement préférée au moins 80 % des particules de l'agent intumescent (A) ayant une granulométrie d'au moins 200 µm, de préférence d'au moins 300 µm.

8. Traversée coupe-feu pour câbles selon l'une des revendications précédentes, **caractérisée en ce que** le matériau plastique (B) est un polymère formant une matrice, en particulier formant une structure expansée, et/ou que le matériau plastique est un polyuréthanne, ou que le composant (B) comprend un mélange d'au moins un isocyanate, et d'au moins un composé réactif vis-à-vis des groupes isocyanate, en particulier un polyol, et/ou un polyuréthanne pouvant être obtenu par réaction d'au moins un isocyanate avec au moins un composé réactif vis-à-vis des groupes isocyanate, en particulier un polyol.

9. Traversée coupe-feu pour câbles selon l'une des revendications précédentes, **caractérisée en ce que** le matériau coupe-feu contient l'isocyanate en des quantités de 5 à 25 % en poids, en particulier de 10 à 20 % en poids, par rapport au matériau coupe-feu, et/ou que le matériau coupe-feu contient le composé réactif vis-à-vis des groupes isocyanate, en particulier le polyol, en des quantités de 20 à 80 % en poids, en particulier de 30 à 70 % en poids, de préférence de 35 à 60 % en poids, par rapport au matériau coupe-feu.

10. Traversée coupe-feu pour câbles selon l'une des revendications précédentes, **caractérisée en ce que**, dans le mélange de l'isocyanate et du composé réactif vis-à-vis des groupes isocyanate, en particulier le polyol, le rapport entre le composé réactif vis-à-vis des groupes isocyanate et l'isocyanate est tel que l'on est en présence d'un excès de groupes NCO, en particulier du moment que le rapport entre le nombre des groupes NCO de l'isocyanate et celui des groupes réactifs vis-à-vis des groupes isocyanate, en particulier les groupes OH, du composé réactif vis-à-vis des groupes isocyanate, en particulier du polyol, est d'au moins 0,90, de préférence d'au moins 1, et en particulier varie dans la plage comprise entre 1:1 et 1,5:1, de préférence entre 1,05:1 et 1,2;1, et/ou en particulier du moment que la teneur du produit d'addition obtenu, en particulier le polyuréthanne, en groupes NCO libres, de préférence terminaux, est de 0,01 à 20 % en poids, en particulier de 0,1 à 10 % en poids, par rapport au produit d'addition.

11. Traversée coupe-feu pour câbles selon l'une des revendications précédentes, **caractérisée en ce que** le matériau coupe-feu contient le mélange (C) en des quantités de 1 à 30 % en poids, en particulier de 2 à 20 % en poids, de préférence de 4 à 18 % en poids, par rapport au matériau coupe-feu, et/ou que le mélange (C) contient le silicate d'aluminium d'une part et le sel d'autre part selon un rapport pondéral silicate d'aluminium/sel compris dans la plage de 0,1:1 à 10:1, en particulier de 0,5:1 à 2:1, de préférence de 0,75:1 à 1,25:1, d'une manière particulièrement préférée d'environ 1:1.

12. Traversée coupe-feu pour câbles selon l'une des revendications précédentes, **caractérisée en ce que** le matériau coupe-feu contient en outre un matériau fibreux (D), en particulier un matériau à base de fibres plastiques, de préférence sous forme de fibres de polyacrylonitrile, le matériau fibreux étant présent en particulier en des quantités de 0,5 à 5 % en poids, de préférence de 1 à 2 % en poids, par rapport au matériau coupe-feu.

13. Traversée coupe-feu pour câbles selon l'une des revendications précédentes, **caractérisée en ce que** le matériau coupe-feu est configuré de façon à être auto-adhésif et/ou auto-adhérent et/ou adhésif, et/ou que le matériau coupe-feu est réalisé de façon à être solide et/ou à présenter une stabilité de forme à la température ambiante, et/ou que le matériau coupe-feu résiste à l'action de l'eau et/ou de gaz, en particulier de l'air, de l'oxygène ou du dioxyde de carbone, et/ou de composés chimiques, en particulier le verre soluble.

14. Traversée coupe-feu pour câbles selon l'une des revendications précédentes, **caractérisée en ce que** le matériau coupe-feu contient :
(A) du graphite expansé, en particulier en des quantités de 10 à 50 % en poids, en particulier de 15 à 45 % en poids, de préférence de 20 à 30 % en poids, par rapport au matériau coupe-feu, avec de préférence une granulométrie d'au moins 200 µm, en particulier d'au moins 300 µm, pour 80 % des particules de graphite expansé ;
(B) au moins un polymère formant une matrice, en particulier formant une structure expansée, de préférence un polyuréthanne, en particulier en des quantités de 20 à 90 % en poids, en particulier de 30 à 80 % en poids, de préférence de 40 à 70 % en poids, par rapport au matériau coupe-feu ;
(C) un mélange à base d'au moins une zéolite d'une part et d'au moins un sel d'un métal alcalin, d'un métal alcalino-terreux ou d'aluminium d'un acide organique, en particulier le stéarate de calcium, d'autre part, en particulier en des quantités de 1 à 30 % en poids, en particulier de 2 à 20 % en poids, de préférence de 4 à 18 % en poids, par rapport au matériau coupe-feu, et/ou présentant en particulier un rapport en poids zéolite/sel compris dans la plage de 0,1:1 à 10:1, en particulier de 0,5:1 à 2:1, de préférence de 0,75:1 à 1,25:1, d'une manière particulièrement préférée d'environ 1:1 ;
(D) éventuellement au moins un matériau fibreux, en particulier un matériau à base de fibres plastiques, de préférence sous forme de fibres de polyacrylonitrile, en particulier en des quantités de 0,5 à 5 % en poids, de préférence de 1 à 2 % en poids, par rapport au matériau coupe-feu.
